Europäisches Patentamt

European Patent Office

Office européen des brevets

(19)

(11) **EP 1 229 792 B1**

(12) **EUROPEAN PATENT SPECIFICATION**

(45) Date of publication and mention
of the grant of the patent:
**11.02.2004 Bulletin 2004/07**

(51) Int Cl.[7]: **A01N 59/00**, A01N 25/22,
C02F 1/76

(21) Application number: **00977011.6**

(22) Date of filing: **06.11.2000**

(86) International application number:
**PCT/US2000/030581**

(87) International publication number:
**WO 2001/035745 (25.05.2001 Gazette 2001/21)**

(54) **CONCENTRATED AQUEOUS BROMINE SOLUTIONS AND THEIR PREPARATION**

KONZENTRIERTE WÄSSRIGE BROMLÖSUNGEN UND IHRE HERSTELLUNG

SOLUTIONS AQUEUSES CONCENTREES A BASE DE BROME ET PROCEDE DE PREPARATION

(84) Designated Contracting States:
**AT BE CH CY DE DK ES FI FR GB GR IE IT LI LU
MC NL PT SE TR**

(30) Priority: **17.11.1999 US 442025
30.11.1999 US 451344
18.09.2000 US 663948
18.09.2000 US 663788**

(43) Date of publication of application:
**14.08.2002 Bulletin 2002/33**

(73) Proprietor: **ALBEMARLE CORPORATION**
Baton Rouge, LA 70801-1765 (US)

(72) Inventors:
• **MOORE, Robert, M., Jr.**
Baton Rouge, LA 70820 (US)
• **WILSON, R., Woodrow, Jr.**
Baton Rouge, LA 70810 (US)
• **TORRES, James, E.**
Baton Rouge, LA 70809 (US)
• **FOCHT, Gary, D.**
Baton Rouge, LA 70808 (US)

(74) Representative: **UEXKÜLL & STOLBERG
Patentanwälte
Beselerstrasse 4
22607 Hamburg (DE)**

(56) References cited:
**WO-A-97/34827          WO-A-99/62339
US-A- 3 328 294          US-A- 3 558 503
US-A- 4 770 198          US-A- 5 235 000**

## Description

### BACKGROUND

Bromine-based biocides have proven biocidal advantages over chlorination-dechlorination for the microbiological control of cooling waters and disinfection of waste treatment systems. The water treatment industry recognizes these advantages to be cost-effective control at higher pH values, almost no loss in biocidal activity in the presence of ammonia, and effective control of bacteria, algae and mollusks.

A common way of introducing bromine based biocides into a water system is through the use of aqueous NaBr in conjunction with NaOCl bleach. The user feeds both materials to a common point whereupon the NaOCl oxidizes the bromide ion to $HOBr/OBr^{\ominus}$. This activated solution is then introduced directly into the water system to be treated. The feeding of the two liquids in this fashion is necessary because the $HOBr/OBr^{\ominus}$ mixture is unstable and has to be generated on-site just prior to its introduction to the water. Furthermore, the feeding, and metering of two liquids is cumbersome, especially as the system has to be designed to allow time for the activation of bromide ion to occur. Consequently many biocide users have expressed the need for a single-feed, bromine-based biocide. Molecular bromine chloride is deemed to meet these demands. It is a liquid at room temperature and can be fed directly to the water system, where immediate hydrolysis occurs to yield HOBr.

$$BrCl + H_2O \rightarrow HOBr + HCl$$

Bromine chloride is a fuming, red liquid or gas, with a boiling point of 5°C, and a vapor pressure of 1800 mm at 25°C. It corrodes most metals in the presence ofwater. It can be seen that certain characteristics of bromine chloride -- especially its corrosiveness, high vapor pressure and fuming tendencies -- necessitate care and skill in its handling and use.

An economically acceptable way of stabilizing high concentrations of aqueous solutions of bromine chloride is described in U.S. Pat. No. 5,141,652 to Moore, et al. The solution is prepared from bromine chloride, water and a halide salt or hydrohalic acid. These solutions were found to decompose at a rate of less than 30% per year and in cases of high halide salt concentration, less than 5% per year. Moreover, solutions containing the equivalent of 15% elemental bromine could be prepared. Unfortunately, the relatively high acidity of these solutions and their tendency to be corrosive and fuming impose limitations on their commercial acceptance.

WO 99/62339 describes a non-continuous process of producing a concentrated liquid biocide formulation which comprises mixing together (a) bromine chloride or bromine and (b) an aqueous solution of alkali metal salt of sulfamic acid having a pH of at least 7, e.g. 7 to 14, in amounts such that (i) the active bromine content of the solution is at least 100,000 ppm (wt/wt) and (ii) the atom ratio of nitrogen to active bromine from a and b is greater than 1 when bromine is used, and is greater than 0.93 when bromine chloride is used.

### SUMMARY OF THE INVENTION

One objective of this invention is to enable the process of commonly-owned WO 99/62339 to be carried out not only in a commercially-feasible manner, but in addition, in an exceptionally efficient manner on a continuous basis. Another objective is to enable a process of WO 99/62339 wherein at least a portion of the bromine chloride is being continuously produced and used as one of the continuous feeds, to be carried out not only in a commercially-feasible, highly efficient manner on a continuous basis, but in addition, to include efficient automatic continuous process control in such process. Other objectives may appear hereinafter.

In one of its embodiments this invention provides a process of producing a concentrated liquid biocide composition which process comprises:

A) continuously feeding into mixing apparatus (i) bromine chloride and (ii) an aqueous solution of alkali metal salt of sulfamic acid (preferably a sodium salt of sulfamic acid), proportioned to produce an aqueous product having an active bromine content of at least 100,000 ppm (wt/wt), and an atom ratio of nitrogen to active bromine from (i) and (ii) greater than 0.93 (preferably greater than 1); and
B) withdrawing said product from said mixing apparatus at a rate sufficient to enable the continuous feeding in A) to be maintained.

In a preferred embodiment, the aqueous solution of alkali metal salt of sulfamic acid is present in said mixing apparatus to which the bromine chloride is being fed. In another preferred embodiment, bromine chloride and aqueous solution of alkali metal salt of sulfamic acid are continuously being fed into said mixing apparatus, and product is withdrawn from said mixing apparatus at a rate sufficient to enable the continuous feeding to be maintained.

In other embodiments, the bromine chloride is continuously formed from bromine and chlorine, and at least a portion of the bromine chloride being continuously produced is used as the continuous feed of bromine chloride in step A) above. Bromine chloride is itself formed by reaction of equimolar amounts of bromine and chlorine. Thus, in forming the bromine chloride equimolar amounts of bromine and chlorine can be used. However; this is not necessary as an excess of bromine over the stoichiometric amount can be, and typically is, used. While an excess of chlorine over stoichiometric can be used, this is less preferable as the biocidal product will contain chlorine species which are less biocidally active than the active bromine species. Thus in plant facilities where bromine chloride is required or desired for use(s) in addition to that required to maintain the continuous feed of (i) in step A) above, the continuous production of the bromine chloride can be scaled up to serve all such uses. Use of a stoichiometric excess of bromine relative to chlorine in the continuous production of bromine chloride produces a mixture ofbromine chloride and bromine. Such mixtures are very suitable for use in producing concentrated liquid biocide compositions pursuant to this invention.

A preferred embodiment includes, in addition to steps A) and B) as described above, the following concurrent operation, namely, continuously, but alternately, withdrawing from at least one and then from at least one other of at least two reaction vessels, an aqueous solution of alkali metal salt of sulfamic acid at a rate that maintains said stream of (it) in A), and during the time the solution is being withdrawn from said at least one of at least two reaction vessels, forming additional aqueous solution of alkali metal salt of sulfamic acid in said at least one other of at least two reaction vessels from which solution is not then being withdrawn. In this way, aqueous alkali metal sulfamate solution can be continuously withdrawn from one or more tanks ("Tank(s) I") to serve as the continuous feed of (ii) in A), while forming more of such solution in one or more other tanks ("Tank(s) II"), so that when Tank(s) I is/are depleted, the system is switched to Tank(s) II which then serve(s) as the supply for the continuous feed of (ii) in A) until depleted, and by that time more of such solution has been formed in Tank(s) I. Thus by alternating the supply and the production from one tank (or group of tanks) to another tank (or group of tanks) and switching back and forth between the filled tanks as the supply, the continuous feed of the aqueous alkali metal sulfamate solution can be maintained without material interruption.

A particularly preferred embodiment of this invention is a process which comprises:

A) continuously feeding into mixing apparatus (i) a bromine chloride stream identified below in C), and (ii) a separate feed stream of an aqueous solution of alkali metal salt ofsulfamic acid identified below in D), in proportions that produce an aqueous product having an active bromine content of at least 100,000 ppm (wt/wt), and an atom ratio of nitrogen to active bromine from (i) and (ii) greater than 0.93;

B) withdrawing the aqueous product from the mixing apparatus at a rate sufficient to enable the continuous feeding in A) to be maintained;

C) continuously contacting bromine and chlorine in a vessel in equimolar quantities, or nearly equimolar quantities, and typically with a stoichiometric excess of bromine, such that bromine chloride is produced, and continuously withdrawing from this vessel a bromine chloride product stream which typically contains excess bromine, at a rate that maintains the feed of (i) in A), at least a portion of this bromine chloride product stream constituting the bromine chloride stream (i) of A); and

D) continuously, but alternately, withdrawing from at least one and then from at least one other of at least two reaction vessels, an aqueous solution of alkali metal salt of sulfamic acid at a rate that maintains the stream of (it) in A), and during the time the solution is being withdrawn from at least one of the reaction vessels, forming additional aqueous solution of alkali metal salt of sulfamic acid in at least one other of the reaction vessels from which solution is not then being withdrawn.

In one of its embodiments this invention provides a process of producing a concentrated liquid biocide composition which process comprises:

a) continuously forming bromine chloride from separate feed streams of bromine and chlorine by maintaining said streams under automatic feed rate control whereby the streams are continuously proportioned to come together in equimolar amounts, or nearly equimolar amounts, and typically with a stoichiometric excess of bromine, to form bromine chloride, which typically contains excess bromine;

b) continuously forming an aqueous product having an active bromine content of at least 100,000 ppm (wt/wt), a pH of at least 7, and an atom ratio of nitrogen to active bromine greater than 0.93:1 by feeding into mixing apparatus separate feed streams of (i) bromine chloride formed in a) and (ii) an aqueous solution of alkali metal salt of sulfamic acid, under automatic feed rate control whereby the feed streams are continuously proportioned to come together in amounts that produce an aqueous product having an active bromine content of at least 100,000 ppm (wt/wt), a pH of at least 7, and an atom ratio of nitrogen to active bromine from (i) and (ii) greater than 0.93:1; and

c) withdrawing said aqueous product from said mixing apparatus at a rate sufficient to enable the continuous feeding in a) and b) to be maintained.

Preferably the automatic feed rate controls in a) and b) are under nested cascade ratio flow control.

Since the reaction between the bromine chloride and the alkali metal sulfamate solution is exothermic, it is desirable to control the temperature of this reaction so that the temperature ofthe aqueous product being formed does not exceed about 50 °C, and preferably is in the range of 25 to 40°C, and most preferably is maintained at about 30°C. Such control may be accomplished, for example, by promptly passing the effluent from the mixing apparatus through a proximately-disposed heat exchanger to remove excess heat from the effluent. Another way of accomplishing such temperature control is to suitably precool the aqueous alkali metal sulfamate solution before it reaches the mixing device such that the temperature of the effluent stays within the foregoing temperature conditions. Both such methods of temperature control can be utilized, if desired.

Another embodiment of the above process includes, in addition to steps a), b), and c) as described above, forming, either periodically or continuously, the aqueous alkali metal sulfamate solution by reaction between sulfamic acid and alkali metal base such as alkali metal hydroxide in water.

One preferred embodiment of the above processes includes the following concurrent operation, namely, continuously, but alternately, withdrawing from at least one and then from at least one other of at least two reaction vessels, an aqueous solution of alkali metal salt of sulfamic acid at a rate that maintains the stream of(ii) in b), and during the time the solution is being withdrawn from at least one of at least two such reaction vessels, forming additional aqueous solution of alkali metal salt of sulfamic acid in at least one other of such reaction vessels from which solution is not then being withdrawn. In this way, aqueous alkali metal sulfamate solution can be continuously withdrawn from one or more tanks ("Tank(s) I") to serve as the continuous feed of (ii) in b), while forming more of such solution in one or more other tanks ("Tank(s) II"), so that when Tank(s) I is/are depleted, the system is switched to Tank(s) II which then serve (s) as the supply for the continuous feed of (ii) in A) until depleted, and by that time more of such solution has been formed in Tank(s) I. Thus by alternating the supply and the production from one tank (or group of tanks) to another tank (or group of tanks) and switching back and forth between the filled tanks as the supply, the continuous feed of the aqueous alkali metal sulfamate solution can be maintained without material interruption.

Another preferred embodiment of the above processes includes the following concurrent operation, namely, continuously withdrawing an aqueous solution of alkali metal salt of sulfamic acid from a circulating inventory of alkali metal salt of sulfamic acid, the withdrawal being at a rate that maintains the stream of (ii) in b), and continuously replenishing the circulating inventory from a supply of such aqueous solution of alkali metal salt of sulfamic acid from a reaction vessel in which aqueous solution of alkali metal salt of sulfamic acid is produced at least periodically in quantity sufficient to at least maintain such circulating inventory. By maintaining a circulating inventory ofthe aqueous solution of alkali metal salt of sulfamic acid in a pump around circulation loop, only one reaction vessel is required for forming such solution from sulfamic acid, an alkali metal base such as alkali metal hydroxide, and water.

The above and other embodiments and features of this invention will be still further apparent from the ensuing description, the accompanying drawing, and/or the appended claims.

## BRIEF DESCRIPTION OF THE DRAWING

Fig. 1 is a schematic flow diagram of a plant layout suitable for the practice of the continuous processes of this invention.

Fig. 2 is a schematic flow diagram of a plant layout of this invention in which an automatic flow control system is included.

Fig. 3 is a schematic flow diagram of another plant layout of this invention in which an automatic flow control system is included.

## FURTHER DETAILED DESCRIPTION OF THE INVENTION

Various types of mixing apparatus can be used in the practice of this invention. In one preferred embodiment the mixing apparatus comprises a static mixer. The static mixer can be of any suitable design and configuration as long as it is capable of continuously receiving the continuous feed streams ofbromine chloride and aqueous alkali metal sulfamate solution, and continuously discharging a mixture formed from these feed streams that is substantially uniform in composition and thus satisfies product specifications.

Another preferred mixing apparatus comprises a vessel equipped with a mechanical stirrer. In this case, the vessel continuously receives the continuous feed streams of bromine chloride and aqueous alkali metal sulfamate solution, and either continuously or intermittently discharges a substantially uniform mixture formed from these feed streams. The mechanical stirrer can be programmed to operate continuously or intermittently as long as the discharge from the vessel is constantly substantially uniform in composition. Thus if the discharge from the vessel is intermittent, the incoming continuous feeds are preferably agitated during at least most of the time the vessel is filling up to a predetermined volume at which point the contents of the vessel are discharged more rapidly than the total incoming feeds until the vessel reaches a predetermined low volume, at which point the discharge is discontinued so that the vessel begins to fill up again. On the other hand, if the discharge is continuous, the system is designed and constructed such that the total incoming volume to the vessel and the concurrent outgoing volume from the vessel remain equal and so that the vessel continuously contains a predetermined volume of contents which are being mixed by the mechanical stirrer. In such case, the stirrer preferably is operated continuously.

The bromine chloride can be preformed bromine chloride maintained and sourced from storage tanks. Preferably however the bromine chloride is concurrently being prepared in a suitable corrosion-resistant reaction vessel on a continuous basis from equimolar amounts or nearly equimolar amounts, of bromine and chlorine, and typically with an excess of bromine. As indicated above, the amount of bromine chloride being continuously produced can equal the amount of bromine chloride being continuously fed to the mixing apparatus, when there is no other need or desire for additional amounts of bromine chloride. But if there are other such needs or desires, the amount of bromine chloride production can be scaled up to meet such needs or desires. The bromine chloride is typically formed by contacting the reactants in equimolar quantities, or nearly equimolar quantities, and typically with the bromine being in excess, and maintaining the temperature of the mixture in the range of 10 to 50°C.

Use of bromine chloride as the source of the active bromine in the concentrated stabilized liquid biocide formulations produced pursuant to this invention is highly advantageous. When such biocidal formulations are used to treat water, all of the bromine of the bromine chloride is made available as active bromine in the resulting highly dilute solution. In other words, the chlorine of the bromine chloride is converted in the process to dissolved alkali metal chloride salt, thereby liberating the bromine as the active bromine content of the biocidal composition. Thus the more expensive component of the bromine chloride -- *viz*., bromine -- is fully utilized in forming active bromine in the aqueous biocidal composition, and concurrently the less expensive component -- the anionic chlorine in the bromine chloride -- makes this beneficial result possible.

The term "active bromine" of course refers to all bromine-containing species that are capable of biocidal activity. It is generally accepted in the art that all of the bromine in the +1 oxidation state is biocidally active and is thus included in the term "active bromine". As is well known in the art, bromine, bromine chloride, hypobromous acid, hypobromite ion, hydrogen tribromide, tribromide ion, and organo-N-brominated compounds have bromine in the +1 oxidation state. Thus these, as well as other such species to the extent they are present, constitute the active bromine content of the compositions of this invention. See, for example, U.S. 4,382,799 and U.S. 5,679,239. A well-established method in the art for determining the amount of active bromine in a solution is starch-iodine titration, which determines all of the active bromine in a sample, regardless of what species may constitute the active bromine. The usefulness and accuracy of the classical starch-iodine method for quantitative determination of bromine and many other oxidizing agents has long been known, as witness Chapter XIV of Willard-Furman, *Elementary Quantitative Analysis,* Third Edition, D. Van Nostrand Company, Inc., New York, Copyright 1933, 1935, 1940.

A typical starch-iodine titration to determine active bromine is carried out as follows: A magnetic stirrer and 50 milliliters of glacial acetic acid are placed in an iodine flask. The sample (usually about 0.2-0.5g) for which the active bromine is to be determined is weighed and added to the flask containing the acetic acid. Water (50 milliliters) and aqueous potassium iodide (15% (wt/wt); 25 milliliters) are then added to the flask. The flask is stoppered using a water seal. The solution is then stirred for fifteen minutes, after which the flask is unstoppered and the stopper and seal area are rinsed into the flask with water. An automatic buret (Metrohm Limited) is filled with 0.1 normal sodium thiosulfate. The solution in the iodine flask is titrated with the 0.1 normal sodium thiosulfate; when a faint yellow color is observed, one milliliter of a 1 wt% starch solution in water is added, changing the color of the solution in the flask from faint yellow to blue. Titration with sodium thiosulfate continues until the blue color disappears. The amount of active bromine is calculated using the weight of the sample and the volume of sodium thiosulfate solution titrated. Thus, the amount of active bromine in a composition of this invention, regardless of actual chemical form, can be quantitatively determined.

The aqueous solution of alkali metal salt of sulfamic acid (alkali metal sulfamate) can be preformed and sourced from storage vessels in supplying the other continuous feed to the mixing apparatus. However it is preferred to concurrently produce such aqueous solution at a rate sufficient to at least continuously supply the amount required to maintain such continuous feed to the mixing apparatus. If there are other needs or desires for such aqueous solution, the amount of solution produced can be scaled up to satisfy such needs or desires.

It is possible to form the aqueous solution of alkali metal salt of sulfamic acid by mixing dry sulfamic acid with a dry water-soluble the alkali metal base also in the dry state, and then mix the resultant dry mixture of solids with water. It is also possible to form the aqueous solution of alkali metal salt of sulfamic acid by mixing dry sulfamic acid with an aqueous solution of alkali metal base. However, the aqueous solution of alkali metal sulfamate is preferably formed by mixing together a slurry of sulfamic acid in water and a solution of the water-soluble alkali metal base.

Any water-soluble inorganic alkali metal base can be used in forming the aqueous solution of alkali metal sulfamate. Examples of such bases include the oxides, hydroxides, carbonates, bicarbonates, acetates, sulfates, and the like. While a water-soluble basic salt or oxide of any alkali metal can be used, the sodium salts or oxides are preferred. However potassium salts or oxides are also very useful. Mixtures of two or more water-soluble sodium bases, mixtures of two or more water-soluble potassium bases, or mixtures of one or more water-soluble sodium bases and one or more water-soluble potassium bases can be used. Highly preferred are aqueous sodium hydroxide solutions which can be formed from sodium oxide or sodium hydroxide. Typically the aqueous solution will contain in the range of 10 to 55 wt% of the alkali metal base, but any concentration of such base that enables the formation of an aqueous bromine chloride solution meeting the pH requirements of this invention can be employed.

Besides having an active bromine content of at least 100,000 ppm (wt/wt), the concentrated aqueous alkali metal sulfamate solution emanating from the mixing apparatus preferably has a pH of at least 7, e.g., a pH in the range of 7 to 14, and preferably above 7 to about 14. Most preferably this solution is an overbased alkali metal sulfamate solution with a pH in the range of 13.0 to 13.7. The pH of the concentrated biocidal solution is typically governed by the pH of the aqueous alkali metal sulfamate solution used as the feed to the mixing apparatus.

It is possible for the solution emanating from the mixing apparatus to have a pH with a numerical value lower than desired, and to feed additional base into the solution after it has left the mixing apparatus to raise the pH to the desired numerical value. Alternatively, a separate aqueous solution of alkali metal base can be fed concurrently and continuously to the mixing apparatus to achieve a more alkaline (basic) concentrated product solution leaving the mixing apparatus. Neither of these latter two procedures is a preferred way to operate, however.

Therefore, in the preferred operating modes the proportions of the bromine chloride and the aqueous alkali metal sulfamate solution continuous feed streams to the mixing apparatus are such that (i) the content of active bromine in the resulting product solution is at least 100,000 ppm (wt/wt) and (ii) the atom ratio of nitrogen to active bromine from these feed streams is greater than 0.93, and more preferably in the range of 1.0 to about 1.4.

By utilizing bromine chloride with caustic in the stabilized bromine composition, higher levels of active halogen are achievable, compared to the levels obtained by the addition of sodium hypochlorite to sodium bromide. The process and the compositions formed also have about twice the content of active bromine as the most concentrated solutions produced pursuant to Goodenough, *et al.* U.S. Pat. No. 3,558,503. Moreover, even at the high levels of active bromine that exist in the compositions of this invention, it has been found possible to provide biocidal compositions that maintain these high levels of active bromine for at least a two-month period, and that do not exhibit a visible or offensive vapor or odor during this period.

In each of the embodiments of this invention the operation is preferably conducted such that the concentrated product solution produced in the process has an active bromine content in the range of 120,000 ppm wt/wt (12 wt%) to 180,000 ppm wt/wt (18 wt%). Also in each of the embodiments of this invention, the atom ratio of nitrogen to active bromine in the concentrated product solution is preferably at least 1:1, e.g., in the range of 1.1 to 1.5. Still higher ratios can be employed, if desired. A particularly preferred atom ratio is from 1.0:1 to 1.4:1.

One of the features of this invention is that aqueous biocide compositions are provided that, even though unpurified, are devoid or are essentially devoid of bromate. In other words, if any bromate is present, the amount thereof as determined by use of the test procedure described hereafter is such that the concentrated aqueous biocide compositions of this invention contain bromate in an amount of up to and including (i.e., no greater than) 50 ppm (wt/wt) based on the total weight of the concentrated aqueous biocidal composition. In fact, in preferred concentrated aqueous biocide compositions of this invention this bromate content is in the range of from 0 to about 40 ppm (wt/wt) as determined using such test procedure.

As is known in the art, bromate is a very undesirable component of aqueous systems. For example, U.S. Pat. No. 5,922,745 points out that in 1995 the United States Environmental Protection Agency published a paper identifying some health concerns relevant to bromate formation (G. Amy, *et al.*, *Water Supply*, 1995, 13(1), 157), and that in the same year animal carcinogenesis was linked to the presence of low levels of bromate in drinking water (J. K. Falwell, and G. O'Neill, *Water Supply*, 1995, 13(1), 29). While some prior processing achieved reductions in the amount of bromate formed when producing stabilized aqueous bromine-containing biocides, there has remained a need for still further reductions in the amount of bromate present in such biocides. Pursuant to this invention, such further reductions have been made possible. Furthermore, because of this invention, it is now possible to form a concentrated aqueous biocide composition having an active bromine content of at least 100,000 ppm (wt/wt), and preferably in the range of 120,000 to 180,000 ppm (wt/wt), which not only is devoid or essentially devoid of bromate, but which since its inception has been devoid or essentially devoid of bromate. Thus in all stages in the production, handling, storage, transportation, and use of such compositions there is a reduced possibility of exposure to bromate. So far as is known, it has not been possible to achieve such results prior to this invention. Moreover, the water treated pursuant to this invention by addition thereto of an effective biocidal amount of active bromine results in a substantial dilution since, in general, on a wt/wt basis dosages in the treated water in the range of 0.5 to 20 parts per million of bromine (expressed as $Br_2$) and preferably in the range of 4 to 10 parts per million of bromine (expressed as $Br_2$) in the aqueous medium being treated for biocidal and/or biofilm control will usually suffice. This in turn means that the very small amount of bromate, if any, present in the concentrated aqueous solution of this invention is sharply reduced by orders of magnitude in the water being treated while achieving the microbiological control for which the composition is being used.

The analytical test procedure to be used for determining the concentration, if any, of bromate in the compositions of this invention is an ion chromatography procedure in which UV detection is employed. The equipment required for the conduct of this procedure is as follows:

a) Ion Chromatograph - Dionex DX-500 or equivalent, equipped with a UV detector and autosampler.
b) Data Acquisition and Analysis Device - VAX MULTICHROM or equivalent chromatography data collection and processing system.
c) Ion Chromatographic Column - Dionex IonPac AG9-HC guard column (p/n 051791) in-line with a Dionex IonPac AS9-HC column (p/n 051786).
d) Volumetric Pipettes - any standard type of suitable volume.
e) Autosampler Vials - 1-mL with caps.
f) Volumetric Flasks - 100-mL.
g) Syringe - 5-cc plastic syringe.
h) Pretreatment Cartridge - OnGuard-H from Dionex (p/n 039596).

The chemicals required for use in the procedure are as follows:

a) Water - Deionized water with a specific resistivity of 17.8 megohm-cm or greater.
b) Sodium Carbonate - "Baker Analyzed"® reagent grade or equivalent.
c) Sodium Bromate - "Baker Analyzed"® reagent grade or equivalent.

The conditions used for the ion chromatograph are as follows:

| | |
|---|---|
| Eluent: | 4.5 millimoles (mM) sodium carbonate |
| Flow-rate | 1.0 mL/minute |
| Injection volume | 50 microliter ($\mu$L) |
| Detector Range | UV at 210 nanometers (nm) |

The eluent is prepared by dissolving 0.4770 gram of the sodium carbonate in 1 liter of the deionized water. These are mixed well and the solution is filtered through a 0.2 IC compatible filter to degas the solution. The concentrated bromate standard solution is prepared by weighing 0.1180 gram $\pm$ 0.001 gram of the sodium bromate into a 100-mL volumetric flask and diluting to volume with deionized water. This produces a solution containing 1,000 micrograms per milliliter of bromate. This concentrated bromate solution should be made fresh at least weekly. The bromate working standard solution is prepared by pipetting 100-microliters of the concentrated bromate standard solution into a 100-mL volumetric flask and filling the flask to volume with deionized water. The solution is mixed well, and yields a standard concentration of 1.0 microgram per milliliter of bromate.

The detailed procedure used for conducting the analysis of an aqueous solution of this invention involves the following steps:

a) Weigh 0.25 gram of the sample solution into a 100-mL volumetric flask. Fill to volume with deionized water and mix well.
b) Flush the OnGuard cartridge with 2-mL of deionized water.
c) Load 5-mL of the sample into the syringe attached to the OnGuard cartridge, pass through at a flow rate of 2 milliliters per minute, and discard the first 3 milliliters. Collect into a 1-mL autosampler vial and cap for analysis.
d) Analyze the samples, making duplicate injections, using the Ion Chromatograph instrument conditions given above.

The calculations involved in the procedure are as follows:

a) Calibration Standard: For bromate, calculate a response factor as follows: R = A/C where R is the response factor, A is the average area counts (2 injections), and C is concentration in micrograms per milliliter ($\mu$g/mL).
b) Samples: ppm bromate = A/(R x W) where A is the average area of sample peak (2 injections), R is the response factor, and W is the weight of the sample in grams.

The processes of this invention are continuous processes and involve continuous feeds to the mixing apparatus. In addition, some embodiments of the invention involve continuous formation of bromine chloride, or continuous contacting of bromine and chlorine to form bromine chloride, or continuous alternate withdrawal of an aqueous solution of alkali metal salt of sulfamic acid from at least one reaction vessel while another quantity of such solution is being formed in at least one other such vessel. In such embodiments the term "continuous" or "continuously" is not meant to exclude interrupted feeds or withdrawals. Generally, if such interruptions occur, they are of short duration and are such as not to materially affect the steady state operation of the overall process, and also are such as not to cause production of a significant quantity of off-specification concentrated product solution. An example of such a slight, non-adverse interruption may occur when switching the flow of aqueous solution of alkali metal salt of sulfamic acid from at least one reaction vessel to another such vessel, an operation which is referred to above as part of a "continuous" feed. As long as such switching operation does not disrupt the operation or result in the formation of a significant quantity of off-specification concentrated product solution, such interruption is acceptable and is within the spirit of the term "continuous". An exception exists where the term "continuous" does not allow for interruption, namely in any case where both continuous and non-continuous (e.g., "intermittent") operation in a given step or operation are both expressly referred to herein. An example of this exception is the embodiment where product is continuously withdrawn from above-referred-to vessel that is equipped with a mechanical stirrer. Such "continuous" withdrawal is not interrupted because in another embodiment expressly referred to herein, the withdrawal of the same product from the same vessel is specifically described as "intermittent". Thus both alternatives (continuous and non-continuous) are expressly referred to in this disclosure.

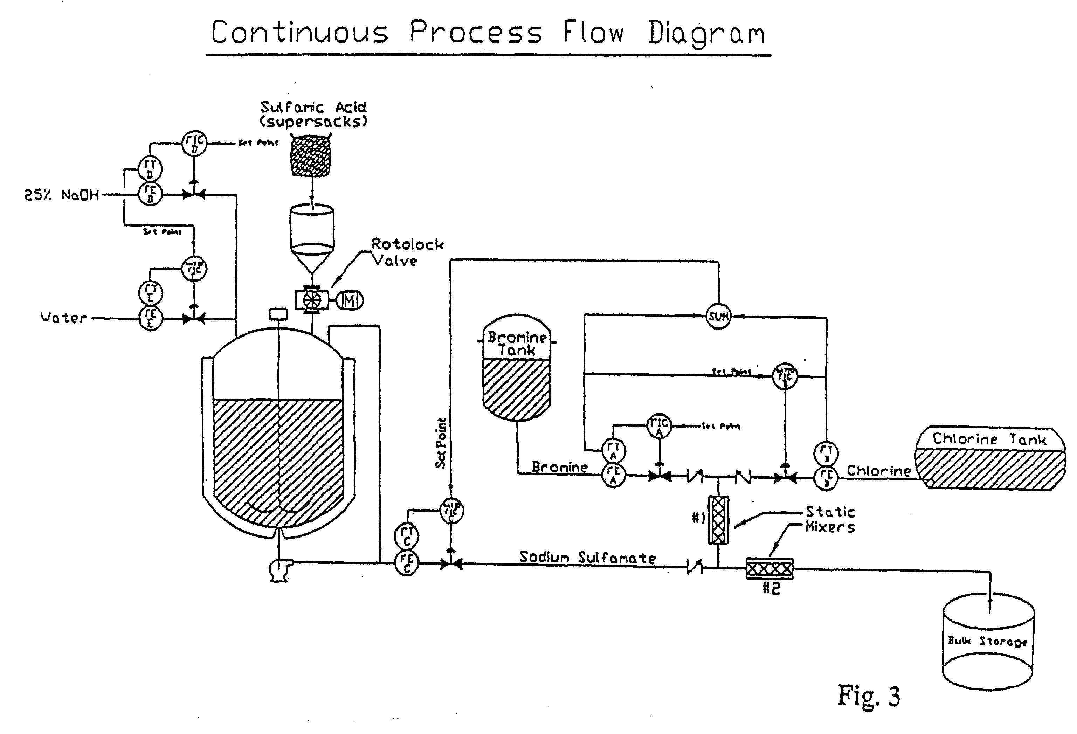

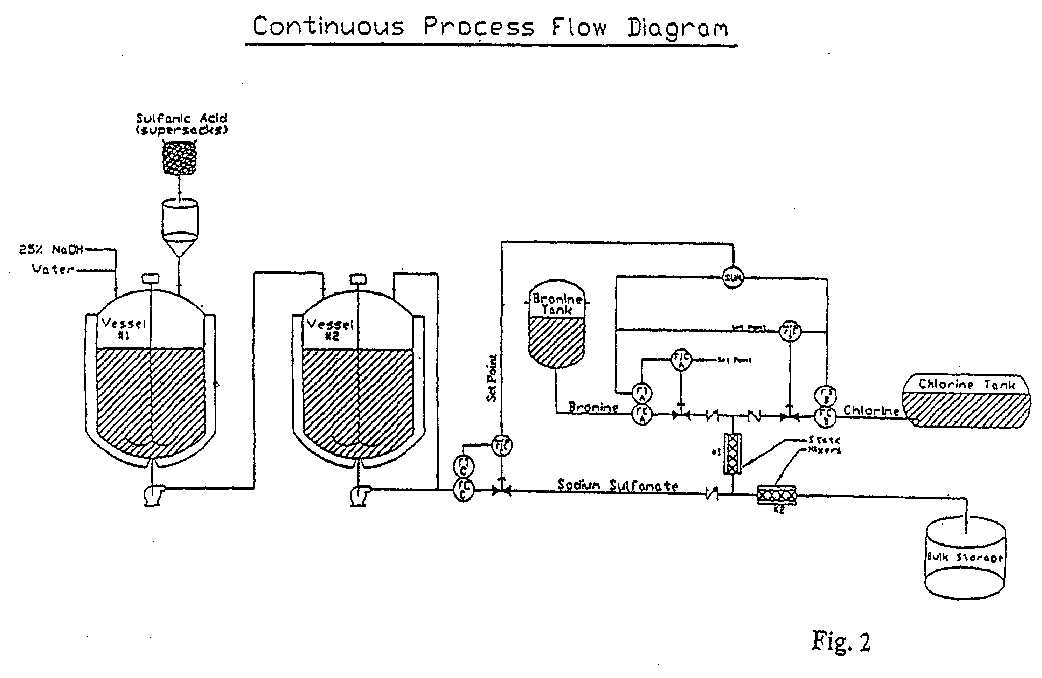

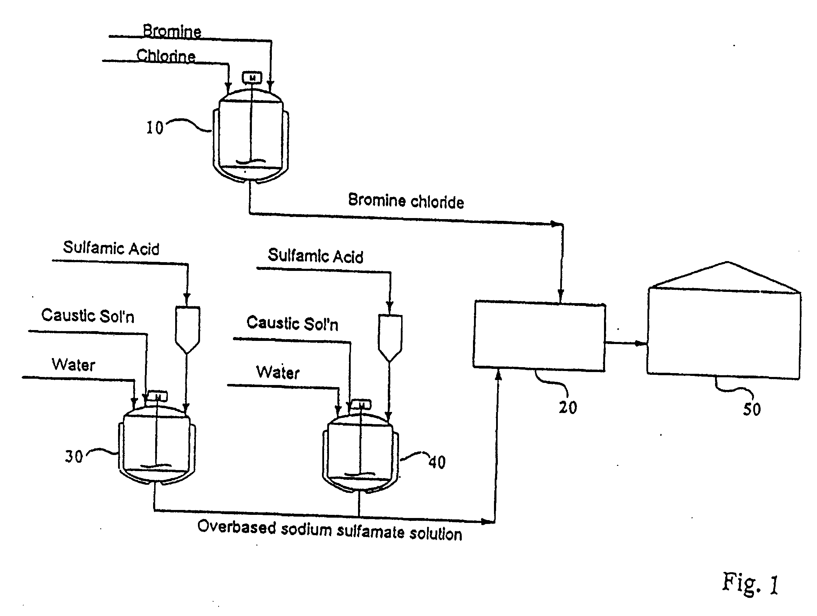

Reference is now made to Fig. 1 of the drawings, which are largely self-explanatory.

In the plant flow diagram schematically depicted in Fig. 1, separate equimolar streams, or nearly equimolar streams, of bromine and chlorine are fed, preferably continuously, into stirred jacketed reactor **10.** The contents of reactor 10 are typically maintained at a temperature in the range of -30 to 30°C so that bromine chloride is produced, preferably continuously. The bromine chloride is transmitted continuously into mixing apparatus **20.** Concurrently sulfamic acid, a 15-25 wt% aqueous solution of sodium hydroxide, and water are charged into either jacketed reactor **30** or jacketed reactor **40,** and the resultant mixture therein is agitated and maintained at 10 to 50°C. The sulfamic acid and the sodium hydroxide are proportioned to produce in the reactor an aqueous solution of sodium sulfamate having a pH which preferably is in the range of 13.0 to 14.0. The reactor **30** or **40** which is not then being used to prepare such aqueous sodium sulfamate solution, contains an identical aqueous solution previously made therein in the same manner. A stream of such aqueous sodium sulfamate solution is continuously withdrawn from reactor **30** or **40** (as the case may be) which contains the previously made solution, and this stream is continuously fed into mixing apparatus **20.** The interaction between the bromine chloride and the sodium sulfamate solution tends to be exothermic. Therefore, it is desirable, particularly in large scale facilities, to cool the mixture as it is being formed. The effluent from mixing apparatus **20** is the concentrated stabilized aqueous biocidal formulation. This product solution is transferred from mixing apparatus **20** to a storage tank **50** or equivalent container such as a railcar or tank truck. If mixing apparatus **20** is a static mixer, the effluent from the static mixer is continuously transferred to the storage tank **50.** On the other hand, if mixing apparatus **20** is, say, a vessel equipped with a mechanical stirrer, and such vessel is intermittently drained so that its contents oscillate between high and low contents of product solution, the transmission of the product solution from such mixing apparatus **20** to storage tank **50** is intermittent. Means (not shown) such as electrically-operated valves and associated electronics for sensing and signaling when to shut one valve while opening the other are included so that the continuous alternate flow of aqueous sodium sulfamate solution from one and then the other of reactors **30** and **40** to mixing apparatus **20** can be maintained on a continuous basis.

Instead of the separate feeds depicted in Fig. 1 of (1) sulfamic acid, (2) a 15-25 wt% aqueous solution of sodium hydroxide, and (3) water, that alternate back and forth between one of reactors **30** and **40** while the other reactor is being drained, separate flows of the aqueous solution of sodium hydroxide and a preformed aqueous slurry of sulfamic acid can be fed alternately to these reactors. It may be expected that other variations and details in the depicted schematic plant flow diagram and/or in the mode of operation will now be readily apparent to those of ordinary skill in the art.

Automatic Process Flow Controls

In the practice of this invention, the various process embodiments are carried out with automatic process flow controls now to be described. Exemplary flow diagrams involving such automatic process flow controls are schematically depicted in Figs. 2 and 3. Both such flow diagrams utilize the same method to simultaneously feed bromine, chlorine, and sodium sulfamate. The difference between the two is that Fig. 2 requires two vessels. The first vessel is used to neutralize sulfamic acid to sodium sulfamate. The second vessel is used as a feed tank to continuously feed sodium sulfamate to the rest of the process. The flow diagram of Fig. 3 is a "1-pot" process using a single reactor vessel to continuously neutralize sulfamic acid and feed sodium sulfamate to the rest of the process.

The following process descriptions as regards Figs. 2 and 3 utilize feedback process control logic. A description of the typical instrumentation elements is provided here to help better understand how this logic process works.

A feedback control loop (for flow control) consists of three elements: (1) a sensor device to measure flow, (2) a control valve to vary to the flow, and (3) a flow controller to direct the control valve to open or close as necessary to maintain the desired flow.

Micro Motion coriolis mass flow meters have been utilized in past processes with demonstrated flow accuracy and are depicted in the following process descriptions. These instruments are available from Micro Motion, Inc. USA, 7070 Winchester Circle, Boulder, CO 80301. These particular instruments use coriolis technology to provide a direct mass flow rate indication (as opposed to a volumetric flow indication which must be converted to mass units and be corrected for temperature variation) and also contain a flow signal transmitter used to provide a feedback flow signal to a control system computer. The size specification of the mass meter depends on the magnitude of the desired flow, density/viscosity characteristics of the flowing liquid, and pressure drop inherent with the associated piping.

Typical automatic control valves are pneumatically actuated to raise/lower a stem in the valve body. A precisely machined and specifically contoured "trim" is attached to the stem and internally resides in the flow path within the valve body. The trim serves to vary the size of the flow orifice as the stem moves up and down. The trim size is specified to provide a particular flow range for a given pressure drop across the valve. The pneumatic actuation signal is typically provided from an I/P device used to convert an electronic signal from a controller (usually measured in milliamps with a 4-20 mA range) to a corresponding pneumatic signal (usually measured in gauge pressure with a 3-15 psig range). Air pressure is supplied to the I/P device which in turn supplies a precise pressure to actuate the valve. The I/P device is usually calibrated at 0-100% scale of a 4-20 mA electronic signal to correspond to a 3-15 psig pneumatic signal at 0-100% scale of the desired flow range (i.e. 4 mA = 3 psig = 0 flow, 20 mA = 15 psig = 100% flow). Depiction of the I/P devices have been omitted in the proposed flow diagrams as they are universally assumed to be required. Size specification of the particular valve depends on the desired pressure drop across the valve, pipe size, and trim selection to provide the desired flow range. Control valves for 1/2" to 1" diameter process lines are typically available from Badger Meter, Inc. Industrial Division, 6116 East 15th St., Tulsa, OK 74158.

The controller is the heart of the control loop and is usually an electronic "black box" within the control system computer software. Most controllers are one of three types: Proportional (P), Proportional Integral (PI), or Proportional Integral Derivative (PID). The names reflect what type of response action will be taken to adjust the control signal. In depth descriptions of each type will not be provided here. Most flow control loops use a PI controller due to the fast response nature of the flow measurement and control valve.

The overall feedback control loop functions as follows:

A desired flow value (setpoint) is input to the controller. A sensor device measures the current flow (measured variable) and returns the current flow value to the controller. The controller calculates the error between the measured variable and the desired setpoint value.

The controller then supplies a signal to the I/P and control valve to vary the position (manipulated variable) of the control valve for either increased or reduced flow to minimize the error between the actual and desired flow values. The determination of how fast or how much to vary the position of the control valve depends on the tuning parameters supplied to the controller for Proportional Integral response. The control loop is "tuned" by changing these parameters to achieve optimal response (error minimization) to process upsets or setpoint changes.

The processes of Figs. 2 and 3 utilize nested cascade ratio flow control to continuously produce the concentrated liquid biocidal compositions. Cascade ratio control is based on feedback control loops. For this type of control, a primary material stream is controlled at a desired flow setpoint. The flow transmitter that provides feedback response to the controller, usually called the master controller, also sends a flow signal to a ratio controller. This signal becomes the setpoint for a second material stream flow controller and hence the term cascade. This controller, usually called the slave controller, provides a signal to a control valve controlling the flow of a second material stream. A flow element in the second stream measures the flow and returns a signal back to the ratio flow controller. The secondary controller calculates the error between the measured flow value and the remotely supplied setpoint. The secondary controller then provides a signal to vary the second control valve accordingly to maintain the secondary flow as a ratio of the primary flow.

The flow controllers are usually contained as individual block elements within the operating software of a process control computer system. A typical control system is a Foxboro I/A Distributed Control System (DCS).

Reference will now be made specifically to Fig. 2. This Figure describes a flow control system in which the alkali metal sulfamate formed is sodium sulfamate using sodium hydroxide. However, the system is applicable to use of other alkali metal sulfamates formed using water-soluble bases other than sodium hydroxide. The control basis for the process of Fig. 2 is the nested cascade ratio flow control system employed to simultaneously control chlorine flow rate at a set ratio of a desired bromine flow rate. The combined total bromine/chlorine flow rate is then used to simultaneously control the sodium sulfamate flow rate at a desired ratio of the bromine/chlorine flow rate.

One of the vessels depicted is used to neutralize sulfamic acid to form sodium sulfamate. The desired water charge is added to such vessel. Solid sulfamic acid is charged from individual bags or supersacks to the same vessel with agitation to form an aqueous sulfamic acid slurry solution. An aqueous solution of 25% caustic (NaOH) is fed to the sulfamic acid solution to form aqueous sodium sulfamate. The sodium sulfamate solution is then transferred via pump pressure to the second depicted vessel which is equipped with a pump around circulation loop. A feed stream from the circulation loop is used to feed sodium sulfamate to the remaining continuous portion of the process.

Liquid bromine is fed continuously from a pressurized bromine supply vessel. The bromine (primary stream) flows through a Micro Motion mass flow meter then through an automatic control valve. The desired bromine flow rate is input as a setpoint to the bromine flow controller (master controller). The flow controller then sends a signal to the bromine control valve to vary the flow to maintain the desired flow rate. A one-way check valve is installed downstream of the bromine control valve to prevent back flow into the bromine supply line.

Liquid chlorine is supplied continuously from a bulk supply vessel either by tank vapor pressure or augmented with nitrogen pressure. Chlorine (secondary stream) flows through a Micro Motion mass flow meter then through an automatic control valve. The flow rate signal from the primary bromine mass flow meter/transmitter is sent to the chlorine ratio flow controller as a remote setpoint. The chlorine ratio flow controller then sends a signal to the chlorine control valve to vary the chlorine flow as a ratio of the bromine flow rate. A one-way check valve is installed downstream of the chlorine control valve to prevent back flow into the chlorine supply line.

The bromine and chlorine lines are brought together into a multi-element static mixer, commonly available from Koch Engineering Company, Inc., P.O. Box 8127, Wichita, KS 67208. The static mixer functions to provide dynamic in-line mixing with minimal linear space and no moving parts.

The flow rate signals from both the bromine and chlorine mass flow meters/transmitters are output to the computer control system and are summed together to obtain an overall flow rate of both streams. The overall flow rate value is then sent to a second ratio flow controller as a remote set point for the sodium sulfamate stream. The sodium sulfamate stream is supplied from pump pressure from the pump around circulation loop on the second depicted vessel. This stream flows through a Micro Motion mass flow meter then through an automatic control valve. The flow rate signal from the sodium sulfamate mass flow meter/transmitter is sent to the ratio controller which sends a signal to the control valve to vary the sodium sulfamate flow rate as a ratio of the combined bromine/chlorine flow rate. A one-way check valve is installed downstream of the sodium sulfamate control valve to prevent back flow into the sodium sulfamate supply line.

The sodium sulfamate stream and the combined bromine/chlorine stream exiting the first static mixer are brought together into a second multi-element static mixer. The exiting stream from this static mixer is the desired concentrated liquid biocidal composition, which is sent to a bulk product storage tank.

The advantage of the process flow system of Fig. 2 is that preparation of the sodium sulfamate solution can take place outside of the continuous portion of the process. The water, caustic, and sulfamic acid can be charged as normal batch operations with a large solution being prepared in advance and transferred to the sodium sulfamate feed vessel as required. Additionally the entire process can be controlled by entering a single set point for the desired bromine flow rate. All other material flow rates are obtained as internal remote setpoints. It should be noted that the magnitude of the desired flow ratios for the ratio controllers are typically configured within the individual controller as set parameters as opposed to user entered setpoint values.

The process flows and control systems of Fig. 3 will now be considered. As is the case of Fig. 2, Fig. 3 is described with reference to a flow control system in which the alkali metal sulfamate is sodium sulfamate. However, the system is applicable to the use of any water-soluble alkali metal sulfamate formed using other water-soluble alkali metal bases.

The process of Fig. 3 eliminates the second vessel depicted in Fig. 2, the vessel that is used in Fig. 2 as a sodium sulfamate supply vessel. The overall system of Fig. 3 includes additional control elements for the single vessel of Fig. 3 to continuously neutralize sulfamic acid and to feed sodium sulfamate solution to the process. The continuous mixing process to feed bromine, chlorine, and sodium sulfamate remain as in Fig. 2.

In the process of Fig. 3, an aqueous solution of 25% caustic is fed to the reaction vessel depicted through a Micro Motion mass flow meter then through an automatic control valve. A desired caustic flow rate setpoint is entered into the caustic flow rate controller. The caustic flow controller then sends a signal to the control valve to suitably vary the caustic flow in order to maintain the desired flow rate. The flow rate signal from the caustic mass flow meter/transmitter is also sent as a remote setpoint to a water ratio flow controller.

Water is fed to the reaction vessel depicted through a Micro Motion mass flow meter then through an automatic control valve. The water ratio controller then sends a signal to the control valve to vary the water flow as a ratio of the caustic flow rate.

Solid sulfamic acid is charged to the depicted vessel at a flow rate consistent with the water/caustic flow to provide the necessary sulfamic acid/sodium sulfamate concentration within the vessel. A Rotolock valve is typically installed in the solids charge line to accomplish solids feeding at a set flow rate. This type of valve is a multi-vane rotary valve coupled to a direct current (DC) motor with a speed controller. The motor speed is adjusted to provide the desired solids feed rate (as determined from separate calibration for speed vs. flow rate). The Rotolock system can be further enhanced by instrumenting for automatic feedback control. This is usually accomplished by mounting the solids hopper feeding the Rotolock valve on weigh cells. For this setup, a desired solids feed rate is entered into a feed controller. The controller sends a signal to the motor to either speed up or slow down to achieve the desired flow rate. The solids flow rate is obtained by internal calculation of the loss-in-weight over time from the solids hopper. If the sulfamic acid charge system was instrumented for automatic control, the logical extension would be to send the solids flow rate signal to the caustic flow controller as a remote setpoint for the desired caustic flow. Since this step consists of a neutralization reaction, a certain amount of residence time is required for complete neutralization to sodium sulfamate. The available information indicates that the neutralization is mass transfer limited by the caustic feed rate and also by the cooling capacity of the reactor. This neutralization is somewhat exothermic and requires cooling to remove the generated heat. A pump around circulation loop is one way to provide sufficient residence time if the required sodium sulfamate flow rate for the rest of the process is not excessively large.

Bromine, chlorine, and sodium sulfamate are then fed identically as in the process of Fig. 2. Sodium sulfamate is fed continuously by taking a feed stream from the pump around circulation loop from the depicted reaction vessel and flowing through a mass flow meter and control valve. The desired flow rate is obtained as a remote setpoint to a ratio flow controller from the summation of the total bromine/chlorine feed rate.

The advantage to the process of Fig. 3 is the elimination of one process vessel. This elimination is offset, at least to some extent, by the expense of additional control elements required for feeding water, caustic, and sulfamic acid.

It will now be understood and appreciated that the automatic flow control systems described herein can be effectively utilized in process layouts other than those depicted in Figs. 2 and 3. One example of one such other process layouts is described with reference to Fig. 1.

Even though the claims hereinafter may refer to substances, components and/or ingredients in the present tense ("comprises"or "is"), the reference is to the substance, component or ingredient as it existed at the time just before it was first contacted, blended or mixed with one or more other substances, components and/or ingredients, or if formed in solution, as it would exist if not formed in solution, all in accordance with the present disclosure. It matters not that a substance, component or ingredient may have lost its original identity through a chemical reaction or transformation during the course of such contacting, blending, mixing, or *in situ* formation, if conducted in accordance with this disclosure.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims.

## Claims

1. A process of producing a concentrated liquid biocide composition, which process comprises

   A) continuously feeding into mixing apparatus (i) bromine chloride and (ii) an aqueous solution of alkali metal salt ofsulfamic acid, proportioned to produce an aqueous product having an active bromine content of at least 100,000 ppm (wt/wt), and an atom ratio of nitrogen to active bromine from (i) and (ii) greater than 0.93:1; and
   B) withdrawing said product from said mixing apparatus at a rate sufficient to enable the continuous feeding in A) to be maintained.

2. A process according to Claim 1 further comprising continuously forming said bromine chloride from bromine and chlorine.

3. A process according to Claim 2 wherein said bromine chloride is continuously formed by continuously contacting bromine and chlorine in a vessel such that bromine chloride is produced, and continuously withdrawing from said vessel a bromine chloride product stream at a rate that maintains the feed of (i) in A), at least a portion of said bromine chloride product stream constituting the bromine chloride stream (i) of A).

4. A process according to Claim 2 wherein said bromine chloride is continuously formed by continuously, but alternately, withdrawing from at least one and then from at least one other of at least two reaction vessels, an aqueous solution of alkali metal salt of sulfamic acid at a rate that maintains said stream of(it) in A), and during the time the solution is being withdrawn from said at least one of at least two reaction vessels, forming additional aqueous solution of alkali metal salt of sulfamic acid in said at least one other of at least two reaction vessels from which solution is not then being withdrawn.

5. A process according to Claim 2 wherein said bromine chloride is continuously formed by continuously contacting bromine and chlorine in a vessel such that bromine chloride is produced, and continuously withdrawing from said vessel a bromine chloride product stream at a rate that maintains the feed of (i) in A), at least a portion of said bromine chloride product stream constituting the bromine chloride stream (i) of A); and continuously, but alternately, withdrawing from at least one and then from at least one other of at least two reaction vessels, an aqueous solution of alkali metal salt of sulfamic acid at a rate that maintains the stream of (ii) in A), and during the time the solution is being withdrawn from at least one of the reaction vessels, forming additional aqueous solution of alkali metal salt of sulfamic acid in at least one other of the reaction vessels from which solution is not then being withdrawn.

6. A process according to any of Claims 1-5 wherein (ii) in A) is an aqueous solution of the sodium salt of sulfamic acid, and wherein said atom ratio is at least 1:1.

7. A process according to any of Claims 1-5 wherein said active bromine content is in the range of 120,000 ppm (wt/wt) to 180,000 ppm (wt/wt), and said atom ratio is in the range of 1.0:1 1 to 1.4:1.

8. A process according to any of Claims 1-5 wherein said mixing apparatus comprises a static mixer.

9. A process according to any of Claims 1-5 wherein said mixing apparatus comprises a vessel equipped with a mechanical stirrer.

10. A process according to any of Claims 1-5 wherein said product is intermittently withdrawn from said vessel.

11. A process according to any of Claims 1-5 wherein said product is continuously withdrawn from said vessel.

12. A process according to Claim 4 or 5 wherein said mixing apparatus comprises a static mixer, and wherein said additional aqueous solution of alkali metal salt of sulfamic acid is formed from an alkali metal base, sulfamic acid, and water.

13. A process according to Claim 4 or 5 wherein said mixing apparatus comprises a static mixer, wherein said aqueous solution of alkali metal salt of sulfamic acid is an aqueous solution of sodium sulfamate, and wherein said additional aqueous solution of alkali metal salt of sulfamic acid is formed from a water-soluble sodium base, sulfamic acid, and water.

14. A process according to Claim 13 wherein said sodium base is an aqueous solution of sodium hydroxide, and wherein the sodium sulfamate is formed as an aqueous solution by charging to a reactor (i) an aqueous solution of sodium hydroxide, and (ii) a slurry of sulfamic acid in water, or (iii) separate charges of sulfamic acid and water, or (iv) both of (ii) and (iii).

15. A process of producing a concentrated liquid biocidal composition which process comprises:

    a) continuously forming bromine chloride from separate feed streams of bromine and chlorine by maintaining said streams under automatic feed rate control whereby the streams are continuously proportioned to come together to form bromine chloride;
    b) continuously forming an aqueous product having an active bromine content of at least 100,000 ppm (wt/wt), a pH of at least 7, and an atom ratio of nitrogen to active bromine greater than 0.93:1 by continuously feeding into mixing apparatus separate feed streams of (i) bromine chloride formed in a) and (ii) an aqueous solution of alkali metal salt of sulfamic acid, under automatic feed rate control whereby the feed streams are continuously proportioned to come together in amounts that produce an aqueous product having an active bromine content of at least 100,000 ppm (wt/wt), a pH of at least 7, and an atom ratio of nitrogen to active bromine from (i) and (ii) greater than 0.93:1; and
    c) withdrawing said aqueous product from said mixing apparatus at a rate sufficient to enable the continuous feeding in a) and b) to be maintained.

16. A process according to Claim 15 wherein said the automatic feed rate controls in a) and b) are under nested cascade ratio flow control.

17. A process according to Claim 15 wherein the temperature of the aqueous product being formed in b) is controlled such that such temperature does not exceed about 50°C.

18. A process according to Claim 17 wherein said temperature is maintained at about 30°C.

19. A process according to Claim 17 or 18 wherein said temperature control is accomplished by passing the effluent from the mixing apparatus through a proximately-disposed heat exchanger to remove excess heat from the effluent.

20. A process according to Claim 17 or 18 wherein said temperature control is accomplished by precooling the aqueous alkali metal sulfamate solution before it reaches said mixing device.

21. A process according to Claim 15 wherein (ii) in b) is an aqueous solution of the sodium salt of sulfamic acid, and wherein said atom ratio is at least 1:1.

22. A process according to Claim 21 wherein said active bromine content is in the range of 120,000 ppm (wt/wt) to 180,000 ppm (wt/wt), and said atom ratio is in the range of 1.0:1 to 1.4:1.

23. A process according to Claim 21 or 22 wherein the automatic feed rate controls in a) and b) are under nested cascade ratio flow control; wherein the temperature of the aqueous product being formed in b) is controlled such that such temperature does not exceed about 50 °C; and wherein said mixing apparatus comprises a static mixer.

24. A process according to Claim 21 or 22 wherein said the automatic feed rate controls in a) and b) are under nested cascade ratio flow control; wherein the temperature of the aqueous product being formed in b) is controlled such that such temperature does not exceed about 50°C; and wherein said mixing apparatus comprises a vessel equipped with a mechanical stirrer.

25. A process according to Claim 15 further comprising producing the aqueous solution of alkali metal salt of sulfamic acid in quantity sufficient to at least maintain the continuous feed of (ii) in b).

26. A process according to Claim 15 further comprising continuously, but alternately, withdrawing from at least one and then from at least one other of at least two reaction vessels, an aqueous solution of alkali metal salt of sulfamic acid at a rate that maintains the continuous feed of (ii) in b), and during at least part of the time the solution is being withdrawn from at least one of at least two such reaction vessels, forming additional aqueous solution of alkali metal salt of sulfamic acid in at least one other of such reaction vessels from which solution is not then being withdrawn.

27. A process according to Claim 26 wherein (ii) in b) is an aqueous solution of the sodium salt of sulfamic acid, and wherein said atom ratio is at least 1:1.

28. A process according to Claim 27 wherein said active bromine content is in the range of 120,000 ppm (wt/wt) to 180,000 ppm (wt/wt), and said atom ratio is in the range of 1.0:1 to 1.4:1.

29. A process according to Claim 27 or 28 wherein the automatic feed rate controls in a) and b) are under nested cascade ratio flow control; wherein the temperature of the aqueous product being formed in b) is controlled such that such temperature does not exceed about 50°C; and wherein said mixing apparatus comprises a static mixer.

30. A process according to Claim 27 or 28 wherein said the automatic feed rate controls in a) and b) are under nested cascade ratio flow control; wherein the temperature of the aqueous product being formed in b) is controlled such that such temperature does not exceed about 50°C; and wherein said mixing apparatus comprises a vessel equipped with a mechanical stirrer.

31. A process according to Claim 15 further comprising continuously withdrawing an aqueous solution of alkali metal salt of sulfamic acid from a circulating inventory of alkali metal salt of sulfamic acid, the withdrawal being at a rate that maintains the continuous stream of (ii) in b), and continuously replenishing the circulating inventory from a supply of such aqueous solution of alkali metal salt of sulfamic acid from a reaction vessel in which aqueous solution of alkali metal salt of sulfamic acid is produced at least periodically in quantity sufficient to at least maintain such circulating inventory.

32. A process according to Claim 31 wherein (ii) in b) is an aqueous solution of the sodium salt of sulfamic acid, and wherein said atom ratio is at least 1:1.

33. A process according to Claim 32 wherein said active bromine content is in the range of 120,000 ppm (wt/wt) to 180,000 ppm (wt/wt), and said atom ratio is in the range of 1.0:1 to 1.4:1.

34. A process according to Claim 32 or 33 wherein the automatic feed rate controls in a) and b) are under nested cascade ratio flow control; wherein the temperature of the aqueous product being formed in b) is controlled such that such temperature does not exceed about 50°C; and wherein said mixing apparatus comprises a static mixer.

35. A process according to Claim 32 or 33 wherein said the automatic feed rate controls in a) and b) are under nested cascade ratio flow control; wherein the temperature of the aqueous product being formed in b) is controlled such that such temperature does not exceed about 50°C; and wherein said mixing apparatus comprises a vessel equipped with a mechanical stirrer.

36. A process of Claim 25 and wherein said aqueous solution of alkali metal salt of sulfamic acid is formed from a water-soluble sodium base, sulfamic acid, and water.

37. A process of Claim 15 wherein said pH is in the range of 13.0 to 13.7.

38. A process of Claim 23 wherein said pH is in the range of 13.0 to 13.7.

39. A process of Claim 24 wherein said pH is in the range of 13.0 to 13.7.

**Patentansprüche**

1. Verfahren zur Herstellung einer konzentrierten flüssigen Biozidzusammensetzung, bei der

   A) (i) Bromchlorid und (ii) eine wäßrige Lösung von Alkalimetallsalz von Sulfaminsäure kontinuierlich in eine Mischvorrichtung proportioniert eingeführt werden, um ein wäßriges Produkt mit einem wirksamen Bromgehalt von mindestens 100 000 ppm (Gewicht/Gewicht) und einem Atomverhältnis von Stickstoff zu wirksamem Brom von (i) und (ii) größer als 0,93:1 zu ergeben, und

   B) das Produkt aus der Mischvorrichtung mit einer Rate entnommen wird, die ausreicht, um ein kontinuierliches Zuführen in A) aufrechterhalten zu können.

2. Verfahren nach Anspruch 1, bei dem ferner kontinuierlich das Bromchlorid aus Brom und Chlor gebildet wird.

3. Verfahren nach Anspruch 2, bei dem das Bromchlorid kontinuierlich gebildet wird, indem Brom und Chlor in einem Gefäß kontinuierlich so in Kontakt gebracht werden, daß Bromchlorid erzeugt wird, und kontinuierlich aus dem Gefäß ein Bromchloridproduktstrom mit einer Rate entnommen wird, die die Zufuhr von (i) in A) aufrechterhält, wobei mindestens ein Teil des Bromchloridproduktstroms den Bromchloridstrom (i) von A) bildet.

4. Verfahren nach Anspruch 2, bei dem das Bromchlorid kontinuierlich gebildet wird, indem kontinuierlich aber alternierend aus mindestens einem und dann aus mindestens einem anderen von mindestens zwei Reaktionsgefäßen eine wäßrige Lösung von Alkalimetallsalz von Sulfaminsäure mit einer Rate entnommen wird, die den Strom von (ii) in A) aufrechterhält, und während der Zeit, in der die Lösung aus dem mindestens einem von mindestens zwei Reaktionsgefäßen entnommen wird, zusätzliche wäßrige Lösung von Alkalimetallsalz von Sulfaminsäure in dem mindestens einen anderen von mindestens zwei Reaktionsgefäßen, aus dem die Lösung dann nicht entnommen wird, gebildet wird.

5. Verfahren nach Anspruch 2, bei dem das Bromchlorid kontinuierlich gebildet wird, indem Brom und Chlor in einem Gefäß kontinuierlich so in Kontakt gebracht werden, daß Bromchlorid erzeugt wird, und ein Bromchloridproduktstrom kontinuierlich aus dem Gefäß mit einer Rate entnommen wird, die die Zufuhr von (i) in A) aufrechterhält, wobei mindestens ein Teil des Bromchloridproduktstroms den Bromchloridstrom (i) von A) bildet, und kontinuierlich, aber alternierend, aus mindestens einem und dann aus mindestens einem anderen von mindestens zwei Reaktionsgefäßen eine wäßrige Lösung von Alkalimetallsalz von Sulfaminsäure mit einer solchen Rate entnommen wird, die den Strom von (ii) in A) aufrechterhält, und während der Zeit, in der die Lösung aus mindestens einem der Reaktionsgefäße entnommen wird, zusätzliche wäßrige von Alkalimetallsalz von Sulfaminsäure in mindestens einem anderen der Reaktionsgefäße, aus dem dann keine Lösung entnommen wird, gebildet wird.

6. Verfahren nach einem der Ansprüche 1 bis 5, bei dem (ii) in A) eine wäßrige Lösung des Natriumsalzes von Sulfaminsäure ist und bei dem das Atomverhältnis mindestens 1:1 ist.

7. Verfahren nach einem der Ansprüche 1 bis 5, bei dem der wirksame Bromgehalt im Bereich von 120 000 ppm (Gewicht/Gewicht) bis 180 000 ppm (Gewicht/Gewicht) liegt und das Atomverhältnis im Bereich von 1,0:1 bis 1,4:1 liegt.

8. Verfahren nach einem der Ansprüche 1 bis 5, bei dem die Mischvorrichtung einen statischen Mischer umfaßt.

9. Verfahren nach einem der Ansprüche 1 bis 5, bei dem die Mischvorrichtung ein Gefäß umfaßt, das mit einem mechanischen Rührer ausgestattet ist.

10. Verfahren nach einem der Ansprüche 1 bis 5, bei dem das Produkt diskontinuierlich aus dem Gefäß entnommen wird.

11. Verfahren nach einem der Ansprüche 1 bis 5, bei dem das Produkt kontinuierlich aus dem Gefäß entnommen wird.

12. Verfahren nach Anspruch 4 oder 5, bei dem die Mischvorrichtung einen statischen Mischer umfaßt und die zusätzliche Lösung von Alkalimetallsalz von Sulfaminsäure aus einer Alkalimetallbase, Sulfaminsäure und Wasser gebildet wird.

13. Verfahren nach Anspruch 4 oder 5, bei dem die Mischvorrichtung einen statischen Mischer umfaßt, die wäßrige Lösung von Alkalimetallsalz von Sulfaminsäure eine wäßrige Lösung von Natriumsulfamat ist und bei dem die zusätzliche wäßrige Lösung von Alkalimetallsalz von Sulfaminsäure aus einer wasserlöslichen Natriumbase, Sulfaminsäure und Wasser gebildet wird.

14. Verfahren nach Anspruch 13, bei dem die Natriumbase eine wäßrige Lösung von Natriumhydroxid ist und bei dem das Natriumsulfamat als eine wäßrige Lösung gebildet wird, indem in einen Reaktor (i) eine wässrige Lösung von Natriumhydroxid und (ii) eine Aufschlämmung von Sulfaminsäure in Wasser oder (iii) separate Ladungen von Sulfaminsäure und Wasser oder (iv) sowohl (ii) als auch (iii) zugeführt werden.

15. Verfahren zur Herstellung einer konzentrierten flüssigen bioziden Zusammensetzung, bei dem

a) kontinuierlich Bromchlorid aus separaten Einsatzmaterialströmen von Brom und Chlor gebildet wird, indem die Ströme unter automatischer Zufuhrratenkontrolle gehalten werden, wodurch die Ströme kontinuierlich proportioniert zusammengelangen, um Bromchlorid zu bilden;

b) kontinuierlich ein wäßriges Produkt mit einem wirksamen Bromgehalt von mindestens 100 000 ppm (Gewicht/Gewicht), einem pH-Wert von mindestens 7 und einem Atomverhältnis von Stickstoff zu wirksamem Brom größer als 0,93:1 gebildet wird, indem kontinuierlich separate Einsatzmaterialströme von (i) Bromchlorid, das in a) gebildet worden ist, und (ii) einer wäßrigen Lösung von Alkalimetallsalz von Sulfaminsäure unter automatischer Zufuhrratenkontrolle zugeführt werden, wodurch die Produktströme kontinuierlich proportioniert in Mengen zusammengelangen, die ein wäßriges Produkt mit einem wirksamen Bromgehalt von mindestens 100 000 ppm (Gewicht/Gewicht), einem pH-Wert von mindestens 7 und einem Atomverhältnis von Stickstoff zu wirksamem Brom aus (i) und (ii) größer als 0,93:1 erzeugen; und

c) das wässrige Produkt aus der Mischvorrichtung mit einer Rate entnommen wird, die ausreicht, um das kontinuierliche Zuführen in a) und b) aufrechtzuerhalten.

16. Verfahren nach Anspruch 15, bei dem die automatischen Zufuhrratenkontrollen in a) und b) unter geschachtelter (nestet) Kaskadenverhältnisstromkontrolle sind.

17. Verfahren nach Anspruch 15, bei dem die Temperatur des wäßrigen Produkts, das in b) gebildet wird, so kontrolliert wird, daß die Temperatur etwa 50 °C nicht übersteigt.

**18.** Verfahren nach Anspruch 17, bei dem die Temperatur bei etwa 30 °C gehalten wird.

**19.** Verfahren nach Anspruch 17 oder 18, bei dem die Temperaturkontrolle bewirkt wird, indem das aus der Mischvorrichtung austretende Material durch einen in der Nähe angeordneten Wärmetauscher geführt wird, um Überschußwärme aus dem austretenden Material zu entfernen.

**20.** Verfahren nach Anspruch 17 oder 18, bei dem die Temperaturkontrolle bewirkt wird, indem die wässrige Alkalimetallsulfamatlösung vorgekühlt wird, bevor sie die Mischvorrichtung erreicht.

**21.** Verfahren nach Anspruch 15, bei dem (ii) in b) eine wässrige Lösung des Natriumsalzes von Sulfaminsäure ist und bei dem das Atomverhältnis mindestens 1:1 ist.

**22.** Verfahren nach Anspruch 21, bei dem der wirksame Bromgehalt im Bereich von 120 000 ppm (Gewicht/Gewicht) bis 180,000 ppm (Gewicht/Gewicht) liegt und das Atomverhältnis im Bereich von 1,0:1 bis 1,4:1 liegt.

**23.** Verfahren nach Anspruch 21 oder 22, bei dem die automatischen Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß die Temperatur etwa 50 °C nicht übersteigt, und die Mischvorrichtung einen statischen Mischer umfaßt.

**24.** Verfahren nach Anspruch 21 oder 22, bei dem die automatischen Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß diese Temperatur etwa 50 °C nicht übersteigt, und die Mischvorrichtung ein Gefäß umfaßt, das mit einem mechanischen Rührer ausgestattet ist.

**25.** Verfahren nach Anspruch 15, bei dem die wäßrige Lösung von Alkalimetallsalz von Sulfaminsäure ferner in Mengen erzeugt wird, die ausreichen, um mindestens die kontinuierliche Zufuhr von (ii) in b) aufrechtzuerhalten.

**26.** Verfahren nach Anspruch 15, bei dem aus mindestens einem und dann aus mindestens einem anderen von mindestens zwei Reaktionsgefäßen kontinuierlich aber alternierend eine wäßrige Lösung von Alkalimetallsalz von Sulfaminsäure mit einer Rate entnommen wird, daß die kontinuierliche Zufuhr von (ii) in b) aufrechterhalten wird, und während mindestens eines Teils der Zeit, in der die Lösung aus mindestens einem von mindestens zwei solchen Reaktionsgefäßen entnommen wird, zusätzliche wäßrige Lösung von Alkalimetallsalz von Sulfaminsäure in mindestens einem anderen solcher Reaktionsgefäße, aus dem die Lösung dann nicht entnommen wird, gebildet wird.

**27.** Verfahren nach Anspruch 26, bei dem (ii) in b) eine wässrige Lösung des Natriumsalzes von Sulfaminsäure ist und das Atomverhältnis mindestens 1:1 ist.

**28.** Verfahren nach Anspruch 27, bei dem der wirksame Bromgehalt im Bereich von 120 000 ppm (Gewicht/Gewicht) bis 180 000 ppm (Gewicht/Gewicht) liegt und das Atomverhältnis im Bereich 1,0:1 bis 1,4:1 liegt.

**29.** Verfahren nach Anspruch 27 oder 28, bei dem die automatischen Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß diese Temperatur etwa 50 °C nicht übersteigt, und die Mischvorrichtung einen statischen Mischer umfaßt.

**30.** Verfahren nach Anspruch 27 oder 28, bei dem die automatische Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß diese Temperatur etwa 50 °C nicht übersteigt, und die Mischvorrichtung ein Gefäß umfaßt, das mit einem mechanischen Rührer ausgestattet ist.

**31.** Verfahren nach Anspruch 15, bei dem ferner eine wäßrige Lösung von Alkalimetallsalz von Sulfaminsäure kontinuierlich aus einem zirkulierenden Vorrat von Alkalimetallsalz von Sulfaminsäure entnommen wird, die Entnahme mit einer Rate erfolgt, die den kontinuierlichen Strom von (ii) in b) aufrechterhält, und der zirkulierende Vorrat kontinuierlich aus einer Zuführung von solcher wäßrigen Lösung von Alkalimetallsalz von Sulfaminsäure aus einem Reaktionsgefäß kontinuierlich aufgefrischt wird, indem wässrige Lösung von Alkalimetallsalz von Sulfaminsäure zumindest periodisch in Mengen erzeugt wird, die ausreichen, um mindestens einen solchen zirkulierenden Vorrat aufrechtzuerhalten.

**32.** Verfahren nach Anspruch 31, bei dem (ii) in b) eine wässrige Lösung des Natriumsalzes von Sulfaminsäure ist und das Atomverhältnis mindestens 1:1 ist.

**33.** Verfahren nach Anspruch 32, bei dem der wirksame Bromgehalt im Bereich von 120 000 ppm (Gewicht/Gewicht) bis 180 000 ppm (Gewicht/Gewicht) liegt und das Atomverhältnis im Bereich von 1,0:1 bis 1,4:1 liegt.

**34.** Verfahren nach Anspruch 32 oder 33, bei dem die automatischen Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß diese Temperatur etwa 50 °C nicht übersteigt, und die Mischvorrichtung einen statischen Mischer umfaßt.

**35.** Verfahren nach Anspruch 32 oder 33, bei dem die automatischen Zufuhrratenkontrollen in a) und b) unter geschachtelter (nestet) Kaskadenverhältnisstromkontrolle liegen, die Temperatur des wäßrigen Produkts, das in b) gebildet worden ist, so kontrolliert wird, daß diese Temperatur etwa 50 °C nicht übersteigt und die Mischvorrichtung ein Gefäß umfaßt, das mit einem mechanischen Rührer ausgestattet ist.

**36.** Verfahren nach Anspruch 25, bei dem die wässrige Lösung von Alkalimetallsalz von Sulfaminsäure aus einer wasserlöslichen Natriumbase, Sulfaminsäure und Wasser gebildet wird.

**37.** Verfahren nach Anspruch 15, bei dem der pH-Wert im Bereich von 13,0 bis 13,7 liegt.

**38.** Verfahren nach Anspruch 23, bei dem der pH-Wert im Bereich von 13,0 bis 13,7 liegt.

**39.** Verfahren nach Anspruch 24, bei dem der pH-Wert im Bereich von 13,0 bis 13,7 liegt.

**Revendications**

**1.** Procédé de préparation d'une composition biocide liquide concentrée, lequel procédé comprend :

A) l'admission en continu dans un mélangeur (i) de chlorure de brome et (ii) d'une solution aqueuse d'un sel de métal alcalin de l'acide sulfamique, proportionnés de manière à préparer un produit aqueux ayant une teneur en brome actif d'au moins 100 000 ppm (p/p), et un rapport atomique de l'azote au brome actif à partir de (i) et de (ii) supérieur à 0,93/1 ; et
B) le sous tirage dudit produit à partir dudit mélangeur à une vitesse suffisante pour permettre à l'admission en continu à l'étape A) d'être maintenue.

**2.** Procédé selon la revendication 1, comprenant en outre la formation en continu dudit chlorure de brome à partir de brome et de chlore.

**3.** Procédé selon la revendication 2, dans lequel ledit chlorure de brome est formé en continu par le mise en contact en continu de brome et de chlore dans une cuve pour que le chlorure de brome soit produit, et le soutirage en continu à partir dudit récipient d'un écoulement d'un produit de chlorure de brome à une vitesse qui maintienne l'admission de (i) à l'étape A), au moins une portion dudit écoulement d'un produit de chlorure de brome constituant l'écoulement du chlorure de brome (i) de l'étape A).

**4.** Procédé selon la revendication 2, dans lequel ledit chlorure de brome est formé en continu par le soutirage en continu, mais par alternance, à partir d'au moins un et ensuite à partir d'au moins un autre parmi au moins deux réacteurs, d'une solution aqueuse d'un sel de métal alcalin de l'acide sulfamique à une vitesse qui maintienne ledit écoulement de (ii) à l'étape A), et durant le temps pendant lequel la solution est en cours de soutirage à partir dudit au moins un parmi au moins deux récipients de réaction, la formation d'une solution aqueuse supplémentaire, d'un sel de métal alcalin de l'acide sulfamique dans ledit au moins un autre parmi au moins deux réacteurs à partir duquel la solution n'est pas soutirée par la suite.

**5.** Procédé selon la revendication 2, dans lequel ledit chlorure de brome est formé en continu par la mise en contact en continu de brome et de chlore dans une cuve pour que le chlorure de brome soit produit, et le soutirage en continu à partir ladite cuve d'un écoulement d'un produit de chlorure de brome à un débit qui maintienne l'admission de (i) à l'étape A), au moins une portion dudit écoulement d'un produit de chlorure de brome constituant l'écoulement de chlorure de brome (i) de l'étape A) ; et le soutirage en continu, mais par alternance, à partir d'au moins un et ensuite à partir d'au moins un autre parmi au moins deux réacteurs, d'une solution aqueuse d'un sel de métal alcalin de l'acide sulfamique à un débit qui maintienne l'écoulement de (ii) à l'étape A), et durant le temps pendant lequel la solution est en cours de soutirage à partir d'au moins un parmi des réacteurs, la formation d'une solution aqueuse supplémentaire d'un sel de métal alcalin de l'acide sulfamique dans au moins un autre des réacteurs à partir duquel la solution n'est pas soutirée par la suite.

**6.** Procédé selon l'une quelconque des revendications 1 à 5, dans lequel (ii) de l'étape A) est une solution aqueuse du sel de sodium de l'acide sulfamique, et dans lequel ledit rapport atomique est d'au moins 1/1.

**7.** Procédé selon l'une quelconque des revendications 1 à 5, dans lequel ladite teneur en brome actif est comprise dans la plage de 120 000 ppm (p/p) à 180 000 ppm (p/p), et ledit rapport atomique est compris dans la plage de 1,0/1 à 1,4/1.

**8.** Procédé selon l'une quelconque des revendications 1 à 5, dans lequel ledit mélangeur comprend un mélangeur statique.

**9.** Procédé selon l'une quelconque des revendications 1 à 5, dans lequel ledit mélangeur comprend une cuve équipée d'un agitateur mécanique.

**10.** Procédé selon l'une quelconque des revendications 1 à 5, dans lequel ledit produit est soutirée par intermittence à partir de ladite cuve.

**11.** Procédé selon l'une quelconque des revendications 1 à 5, dans lequel ledit produit est soutirée en continu à partir de ladite cuve.

**12.** Procédé selon la revendication 4 ou la revendication 5, dans lequel ledit mélangeur comprend un mélangeur statique, et dans lequel ladite solution aqueuse supplémentaire d'un sel de métal alcalin de l'acide sulfamique est formée à partir d'une base de métal alcalin, d'acide sulfamique et d'eau.

**13.** Procédé selon la revendication 4 ou la revendication 5, dans lequel ledit mélangeur comprend un mélangeur statique, dans lequel ladite solution aqueuse de sel d'un métal alcalin de l'acide sulfamique est une solution aqueuse de sulfamate de sodium, et dans lequel ladite solution aqueuse supplémentaire d'un sel de métal alcalin de l'acide sulfamique est formée à partir d'une base de sodium soluble dans l'eau, d'acide sulfamique et d'eau.

**14.** Procédé selon la revendication 13, dans lequel ladite base de sodium est une solution aqueuse d'hydroxyde de sodium, et dans lequel le sulfamate de sodium est formé sous la forme d'une solution aqueuse par le chargement dans un réacteur (i) d'une solution aqueuse d'hydroxyde de sodium, et (ii) d'une suspension d'acide sulfamique dans de l'eau, ou (iii) de charges séparées d'acide sulfamique et d'eau, ou (iv) des deux parmi (ii) et (iii).

**15.** Procédé de préparation d'une composition biocide liquide concentrée, lequel procédé comprend :

a) la formation en continu de chlorure de brome à partir des écoulements des admissions séparées de brome et de chlore par le maintien desdits écoulements sous la régulation automatique du débit d'alimentation grâce à laquelle les écoulements sont proportionnés en continu pour se rejoindre et former le chlorure de brome ;
b) la formation en continu d'un produit aqueux ayant une teneur en brome actif d'au moins 100 000 ppm (p/p), un pH d'au moins 7, et un rapport atomique de l'azote au brome actif supérieur à 0,93/1 par l'admission en continu dans le mélangeur des écoulements des admissions séparées du (i) chlorure de brome formé à l'étape a) et de (ii) une solution aqueuse d'un sel de métal alcalin de l'acide sulfamique, sous la régulation automatique du débit d'alimentation grâce à laquelle les écoulements des admissions sont proportionnés en continu pour se rejoindre dans des quantités qui produisent un produit aqueux ayant une teneur en brome actif d'au moins 100 000 ppm (p/p), un pH d'au moins 7, et un rapport atomique de l'azote au brome actif à partir de (i) et de (ii) supérieur à 0,93/1 ; et
c) le retrait dudit produit aqueux à partir dudit mélangeur à un débit suffisant pour permettre à l'admission en continu à l'étape a) et à l'étape b) d'être maintenue.

**16.** Procédé selon la revendication 15, dans lequel lesdites régulations automatiques du débit d'alimentation à l'étape a) et à l'étape b) sont sous la régulation proportionnelle en cascade imbriquée.

**17.** Procédé selon la revendication 15, dans lequel la température du produit aqueux en cours de formation à l'étape b) est régulée pour que cette température n'excède pas 50°C environ.

**18.** Procédé selon la revendication 17, dans lequel ladite température est maintenue à 30°C environ.

**19.** Procédé selon la revendication 17 ou la revendication 18, dans lequel ladite régulation de la température est effectuée par le passage de l'effluent provenant du mélangeur à travers un échangeur de chaleur disposé à proximité afin d'éliminer l'excès de chaleur de l'effluent.

**20.** Procédé selon la revendication 17 ou la revendication 18, dans lequel ladite régulation de la température est effectuée par le refroidissement préalable de la solution aqueuse de sulfamate de métal alcalin avant qu'elle n'atteigne ledit dispositif de mélange.

**21.** Procédé selon la revendication 15, dans lequel (ii) de l'étape b) est une solution aqueuse du sel de sodium de l'acide sulfamique, et dans lequel ledit rapport atomique est d'au moins 1/1.

**22.** Procédé selon la revendication 21, dans lequel ladite teneur en brome actif est comprise dans la plage de 120 000 ppm (p/p) à 180 000 ppm (p/p), et ledit rapport atomique est compris dans la plage de 1,0/1 à 1,4/1.

**23.** Procédé selon la revendication 21 ou la revendication 22, dans lequel les régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend un mélangeur statique.

**24.** Procédé selon la revendication 21 ou la revendication 22, dans lequel lesdites régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend une cuve équipée d'un agitateur mécanique.

**25.** Procédé selon la revendication 15, comprenant en outre la préparation de la solution aqueuse d'un sel de métal alcalin de l'acide sulfamique en quantité suffisante pour au moins maintenir l'admission en continu de (ii) à l'étape b).

**26.** Procédé selon la revendication 15, comprenant en outre le soutirage en continu, mais par alternance, à partir d'au moins un et ensuite à partir d'au moins un autre parmi au moins deux réacteurs, d'une solution aqueuse d'un sel de métal alcalin de l'acide sulfamique à un débit qui maintienne l'alimentation continue de (ii) à l'étape b), et durant au moins une partie du temps pendant lequel la solution est en cours de retrait à partir d'au moins un parmi au moins deux tels réacteurs, la formation d'une solution aqueuse supplémentaire d'un sel de métal alcalin de l'acide sulfamique dans au moins un autre parmi ces réacteurs à partir duquel la solution n'est pas soutirée par la suite.

**27.** Procédé selon la revendication 26, dans lequel (ii) à l'étape b) est une solution aqueuse du sel de sodium de l'acide sulfamique, et dans lequel ledit rapport atomique est d'au moins 1/1.

**28.** Procédé selon la revendication 27, dans lequel ladite teneur en brome actif est comprise dans la plage de 120 000 ppm (p/p) à 180 000 ppm (p/p), et ledit rapport atomique est compris dans la plage de 1,0/1 à 1,4/1.

**29.** Procédé selon la revendication 27 ou la revendication 28, dans lequel les régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend un mélangeur statique.

**30.** Procédé selon la revendication 27 ou la revendication 28, dans lequel lesdites régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend une cuve équipé d'un agitateur mécanique.

**31.** Procédé selon la revendication 15, comprenant en outre le retrait en continu d'une solution aqueuse d'un sel de métal alcalin de l'acide sulfamique à partir d'un stock en circulation d'un sel de métal alcalin de l'acide sulfamique, le retrait étant effectué à un débit qui maintienne l'écoulement en continu de (ii) à l'étape b), et le remplissage en continu du stock en circulation à partir d'une alimentation en une telle solution aqueuse d'un sel de métal alcalin de l'acide sulfamique à partir d'un réaceur dans lequel une solution aqueuse d'un sel de métal alcalin de l'acide sulfamique est produite au moins périodiquement en quantité suffisante pour au moins maintenir un tel stock en circulation.

**32.** Procédé selon la revendication 31; dans lequel (ii) à l'étape b) est une solution aqueuse du sel de sodium de l'acide sulfamique, et dans lequel ledit rapport atomique est d'au moins 1/1.

**33.** Procédé selon la revendication 32, dans lequel ladite teneur en brome actif est comprise dans la plage de 120 000 ppm (p/p) à 180 000 ppm (p/p), et ledit rapport atomique est compris dans la plage de 1,0/1 à 1,4/1.

**34.** Procédé selon la revendication 32 ou la revendication 33, dans lequel les régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend un mélangeur statique.

**35.** Procédé selon la revendication 32 ou la revendication 33, dans lequel lesdites régulations automatiques du débit d'alimentation à l'étape a) et à l'étape b) sont sous la régulation proportionnelle en cascade imbriquée ; dans lequel la température du produit aqueux en cours de formation à l'étape b) est régulée pour que cette température n'excède pas 50°C environ ; et dans lequel ledit mélangeur comprend une cuve équipée d'un agitateur mécanique.

**36.** Procédé selon la revendication 25 et dans lequel ladite solution aqueuse d'un sel de métal alcalin de l'acide sulfamique est formée à partir d'une base de sodium soluble dans l'eau, d'acide sulfamique et d'eau.

**37.** Procédé selon la revendication 15, dans lequel ledit pH est compris dans la plage de 13,0 à 13,7.

**38.** Procédé selon la revendication 23, dans lequel ledit pH est compris dans la plage de 13,0 à 13,7.

**39.** Procédé selon la revendication 24, dans lequel ledit pH est compris dans la plage de 13,0 à 13,7.

# Continuous Process Flow Diagram

Fig. 3

# Continuous Process Flow Diagram

Fig. 2

EP 1 229 792 B1

EP 1 229 792 B1

Bromine

Chlorine

10

Bromine chloride

Sulfamic Acid

Sulfamic Acid

Caustic Sol'n

Caustic Sol'n

Water

Water

20

50

30

40

Overbased sodium sulfamate solution

Fig. 1